# EUROPEAN PATENT SPECIFICATION

(11) **EP 2 487 726 B1**
(45) Date of publication and mention of the grant of the patent: **19.09.2012**
(21) Application number: 11192149.0
(22) Date of filing: 06.12.2011
(51) Int. Cl.: H01L 31/042, H01L 31/048

(54) **Surface covering system comprising photovoltaic panels**
System für flächenverkleidung mit photovoltaischen Paneelen
Systeme de revetement de surfaces avec panneaux photovoltaiques

(30) Priority: 20.04.2011 IT MI20110677
(43) Date of publication of application: 15.08.2012
(73) Proprietor: Luzi, Gazmend, 20834 Nova Milanese (MI) (IT)
(72) Inventor: Luzi, Gazmend, 20834 Nova Milanese (MI) (IT)
(74) Representative: Spina, Alessandro

(56) References cited:
- US-A- 5 706 617
- US-A- 6 111 189
- US-A1- 2011 047 903
- US-B1- 6 182 404

## Description

The present invention relates to the installation of photovoltaic panels and in particular to a surface covering system, particularly for building roofs, comprising photovoltaic panels.

In the field of building constructions the installation of photovoltaic panels suitable to convert solar energy into electric energy is more and more common. Photovoltaic panels are typically arranged on building roofs and so oriented as to maximize their exposure to solar radiation over the day.

A photovoltaic panel is generally made up of a panel, e.g. made of glass, to which a plurality of solar cells electrically connected to each other are restrained. The panel is inserted in a frame and sealed thereon through suitable sealing processes in order to prevent water and dust from reaching the solar cells. For this reason a photovoltaic panel is generally certified together with its frame.

The frames for photovoltaic panels are anchored on a building roof by suitable supporting members such as mounts and/or brackets, thus allowing to make surface coverings comprising a plurality of photovoltaic panels. The frames are also generally spaced from the surface to be covered by suitable spacers, e.g. profiled bars, allowing to define a ventilation cavity between the photovoltaic panels and the roof. This allows to limit overheating phenomena of photovoltaic panels, which penalize the efficiency of conversion of solar energy into electric energy.

In the field of building constructions the need for a higher architectural integration between photovoltaic panels and covering systems is more and more felt. An example of such integration is taught in the European patent application 1548202, which discloses covering members comprising an insulating material layer and provided with special grooved profiles forming brackets suitable to receive photovoltaic panels.

Document US 2011/047203 A describes a photovoltaic system with a multitude of photovoltaic panels.

Due to the size of the brackets, this type of architectural integration between photovoltaic panels and covering members remarkably limits the size of the surface exposed to solar radiation and thus the performance of the energy conversion system.

In order to maximize the surface exposed to solar radiation it would be desirable that photovoltaic panels form the whole covering surface of a roof, completely replacing the traditional covering members.

However, it is known that covering systems comprising photovoltaic panels cannot be used as an alternative to traditional covering systems because they are not waterproof. This is mainly due to the fact that plays must be left between adjacent panels in order to compensate for thermal dilations and retractions of their supporting members, i.e. bars and/or brackets, and of their frames, which are typically made of metal materials.

In other words, a covering with photovoltaic panels always comprises a plurality of passages in the form of slits between the edges of adjacent frames and thus necessarily requires the presence of an underlying waterproof covering, which is typically formed of tiles and/or waterproof members made of sheet metal and possibly comprising an insulating layer.

There is therefore the need to provide waterproof surface covering systems comprising photovoltaic panels that may be used alternatively to traditional covering systems, which is an object of the present invention.

It is also an object of the present invention to provide a covering system comprising photovoltaic panels that is simple and cheap to manufacture.

An idea of solution underlying the present invention is to provide a surface covering system comprising photovoltaic panels with a plurality of sealing elements arranged along the slits between adjacent panels, wherein the sealing elements are extensible and retractable transversely to the slits. This allows to make the surface covering system waterproof and at the same time to compensate for thermal dilations and retractions of the supporting members and of the frames of the photovoltaic panels.

It is also an idea of solution to combine the use of extensible and retractable sealing elements with the inclination of the covering surface defined by photovoltaic panels with respect to a horizontal plane. This allows to make water flow towards water drainage systems of a building, e.g. gutter pipes, thus avoiding that it remains on the sealing elements.

This combination of features allows to make in a simple and cheap way surface covering systems comprising photovoltaic panels that can be completely integrated in the architectonic structure of a building, thus making it possible to install them in place of traditional covering systems.

Moreover, thanks to its waterproof characteristics, the surface covering system according to the invention may be combined with thermal and/or acoustic insulation members, thus being able to perform thermal and/or acoustic insulation as it is typical of a traditional covering system, in addition to the conversion of the solar radiation into electric energy.

According to a preferred embodiment of the invention, the extensible and retractable sealing elements comprise two sets of parallel flaps extending in a longitudinal direction thereof, the flaps of the two sets facing each other and being arranged in a comb-like manner in a transverse direction of the sealing elements. In other words, considering a cross-section of the sealing element, the flaps are interdigitated, i.e. interlocked like the fingers of clasped hands, thus defining extremely long and tortuous ways that cause high head losses in the water flows present on the surface covering. The interdigitated flaps do not block the passage of water, but this arrangement combined with the inclination of the covering surface allows to drain water before it reaches the surface underlying the covering.

The flaps may advantageously be integrally formed along the edges of the frames, thus allowing to make the covering system waterproof in an extremely simple and cheap way without requiring to assemble additional components between adj acent frames. In this way in fact the sealing elements are not separate components of the covering system, but are formed by the parallel flaps of the frames that are arranged in a comb-like manner when the frames are assembled adjacent to each other.

Moreover, the number of flaps may advantageously be related to the inclination angle of the surface to be covered in order to design the most suitable sealing members for the covering system.

The extensible and retractable sealing elements are preferably housed in the ventilation cavity present between the panels and the covered surface of the building and restrained to the spacers associated with the frames of the photovoltaic panels. This allows to maximize the size of the covering surface exposed to solar radiation compatibly with the plays necessary to compensate for the thermal dilations or retractions of the supporting members and of the frames of the panels. Moreover, this allows to hide the sealing elements from the users, as well as to protect them from atmospheric agents and to make their size independent of the size of the slits between the panels frames.

Further advantages and features of the surface covering system according to the present invention will become clear to those skilled in the art from the following detailed and non-limiting description of embodiments thereof with reference to the attached drawings, wherein:
- figure 1 is a top view of a portion of a surface covering system according to the present invention;
- figure 2 is a schematic cross-section view of the covering system of figure 1 taken along line II-II;
- figure 3 shows a detail III of figure 2;
- figure 4 is a perspective view schematically showing a sealing element of the surface covering system according to the invention;
- figure 5 is a schematic cross-section view, similar to figure 3, showing a preferred embodiment of the sealing element of the surface covering system according to the invention;
- figure 6 is a schematic cross-section view showing a surface covering system according to the present invention arranged on a building roof and comprising insulation elements; and
- figure 7 shows a detail VII of figure 6.

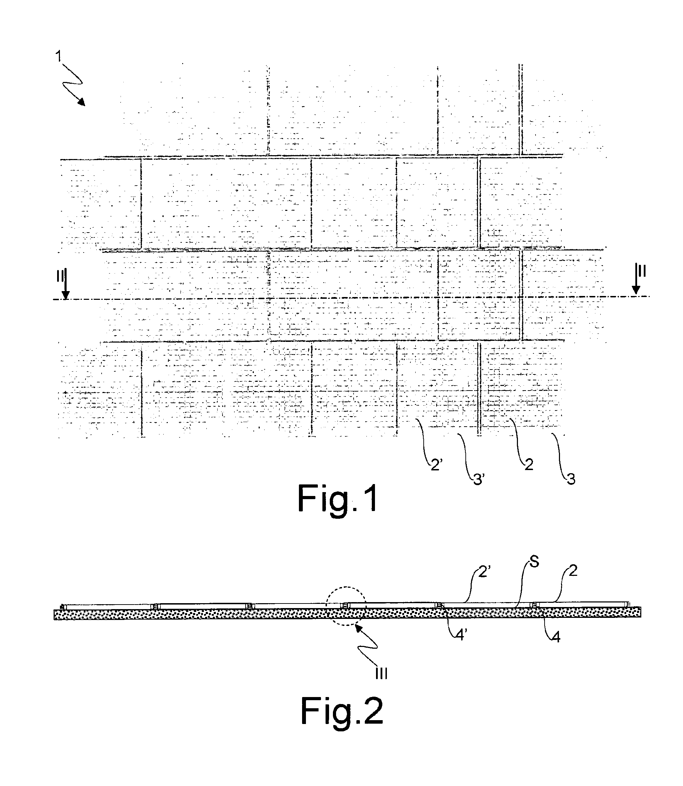

Figures 1 to 3 show a surface covering system 1 suitable to be mounted on a building surface and comprising a plurality of photovoltaic panels 2, 2', ....

The photovoltaic panels 2, 2', ... are individually inserted and sealed in respective frames 3, 3', ... that are arranged adjacent to each other in an assembled configuration of the surface covering system 1.

The frames 3, 3', ... are anchored on a surface S to be covered, e.g. a building roof, by suitable supporting members such as mounts and/or brackets (not shown) and preferably comprise spacers 4, 4', ... that define between the panels 2, 2', ... and the surface S a ventilation cavity C, which is suitable to allow the passage of cooling air flows. As it is known in fact the passage of air flows lapping the surfaces of the panels opposite to the surfaces exposed to solar radiation allows to limit overheating phenomena of photovoltaic panels and thus to maximize the efficiency of conversion of solar radiation into electric energy.

The spacers 4, 4', ... may advantageously be in the form of straight bars running along the entire periphery of the frames 3, 3', ... allowing a continuous contact thereof on the surface S and may be so shaped as to receive assembling mounts.

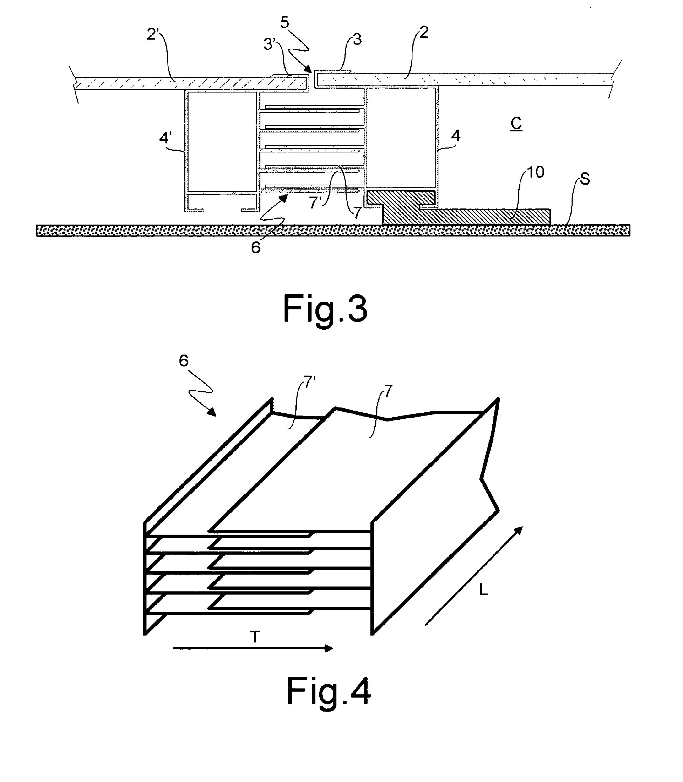

As shown in detail in figure 3, slits 5 are present between the edges of adjacent frames 3, 3', ..., defining plays that allow to compensate for thermal dilations and retractions to which the supporting members of the panels 2, 2', ..., as well as their frames 3, 3', ... are subj ected.

According to the present invention, the covering system 1 further comprises a plurality of sealing elements 6 associated with the frames 3, 3' and arranged at the slits 5 in order to close them, thus preventing water and dust from passing therethrough.

As shown in figure 4, the sealing elements 6 extend in a longitudinal direction L so as to be arranged parallel to the slits 5 in an assembled configuration of the surface covering system 1 and are extensible and retractable in a transverse direction T perpendicular to the longitudinal direction L, thus perpendicularly to the slits 5.

The use of sealing elements 6 that are transversely extensible and retractable allows to compensate for thermal dilations and retractions of the supporting members and of the frames 3, 3', ... of the photovoltaic panels 2, 2', ..., which cause variations of the size of the slits 5, while maintaining the covering system 1 waterproof.

Still according to the present invention, the covering surface defined by the photovoltaic panels 2, 2', ... is inclined at a predefined angle α with respect to a horizontal plane, e.g. the ground on which the building rests.

The inclination of the covering surface relative to a horizontal plane allows to make the water retained by the sealing elements 6 flow into drainage systems of the building, e.g. gutter pipes.

The angle α of inclination of the covering system 1 may be the same as the natural inclination of the roof of a building, or it may be obtained by means of a suitable design of the supporting members of the photovoltaic panels 2, 2', ....

The sealing elements 6 may be restrained to the edges of the frames 3, 3', ..., but are preferably restrained to their spacers 4, 4', ... and thus arranged in the ventilation cavity C between the panels 2, 2', ... and the surface S of the building. This allows to minimize the size of the slits 5 present between the frames 3, 3', ... of the panels 2, 2', .. compatibly with the prescribed plays and to maximize the size of the surface exposed to solar radiation. This arrangement also makes the size of the sealing elements 6 completely independent of the size of the slits 5, thus allowing to optimize their design on the basis of the sealing requirements of the surface covering 1.

As shown in the cross-section of figure 3, the spacers 4, 4' of two adjacent frames 3, 3' are spaced from the peripheral edges of the respective frames 3, 3' towards their centers. Therefore, considering two adjacent frames 3, 3', the distance between the spacers 4, 4' is larger than the distance between the edges of the frames 3, 3', i.e. the size of the slit 5. Such a space is suitable to receive a sealing element 6, whose size in the transverse direction is e.g. larger than the size of the slit 5.

In the embodiment of the invention shown in the drawings and particularly referring to figures 3 and 4, the sealing elements 6 comprise two sets of parallel flaps 7, 7' extending in the longitudinal direction L thereof. The flaps 7, 7' of the two sets face each other and are arranged in a comb-like manner in the transverse direction T of the sealing elements 6, i.e. perpendicularly to the longitudinal direction L. In other words, the flaps 7, 7' of the two sets are interdigitated in the transverse direction T, i.e. interlocked like the fingers of clasped hands, thus defining an extremely long and tortuous path that causes high head losses in the water flows passing through the slits 5.

The two sets of flaps 7, 7' are also movable relative to each other in the transverse direction T.

Still referring to figure 3, in an assembled configuration of the surface covering 1 the two sets of parallel flaps 7, 7' are respectively fixed to adjacent frames 3, 3', preferably to their spacers 4, 4'. Therefore, when thermal dilations or retractions of the frames 3, 3' or of their supporting members occur, the flaps 7, 7' of each set move relative to each other, thus varying their relative distance while maintaining the long and tortuous path for the water flows passing through the slit 5. In other words, thanks to the special configuration of the sealing elements 6 described above, the surface covering system 1 can compensate for thermal dilations and/or retractions without losing its waterproof characteristics.

According to an embodiment of the invention, the flaps 7, 7' of the two sets forming the sealing elements 6 may advantageously be integrally formed with the frames of the photovoltaic panels along their peripheries, thus allowing to make the covering system 1 waterproof in an extremely simple and cost-effective way without requiring to assemble additional elements between adjacent frames.

As shown in figure 3, for instance, a first set of flaps 7 are integrally formed with the spacers 4 of the frame 3 of a first photovoltaic panel 2 and protrude outwards beyond its periphery. Similarly, a second set of flaps 7' are integrally formed with the spacers 4' of the frame 3' of a second photovoltaic panel 2' and protrude outwards beyond its periphery.

Upon assembly of the surface covering system 1 by arranging the frames 3, 3' adjacent to each other, the flaps 7, 7' of the two sets are interdigitated, thus forming the sealing elements 6 without requiring the use of separate components.

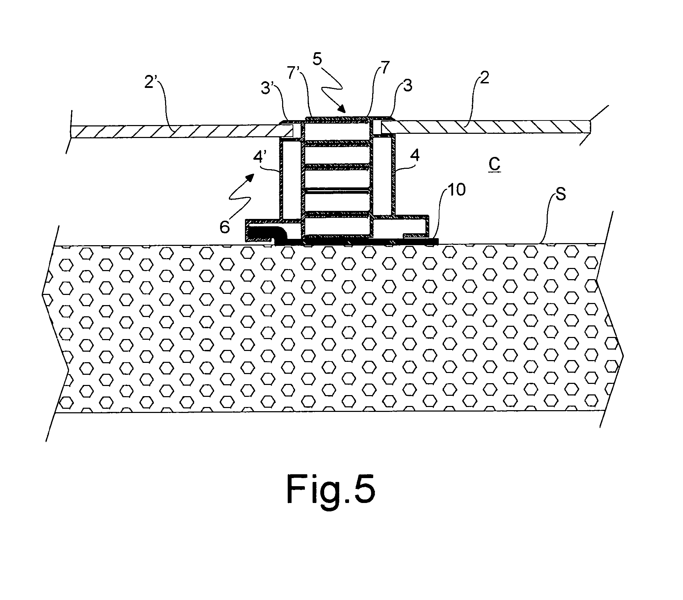

Figure 5 shows an preferred embodiment of the sealing element 6, wherein the first and second sets of flaps 7, 7' are integrally formed with the spacers 4, 4' and additional flaps of each set are formed at the edges of the frames 3, 3'. The technical effect of this solution is that the slit 5 is substantially closed, allowing to improve the impermeability of the surface covering system 1. The slits 5 in fact are completely covered by the superimposed flaps 7, 7' formed at the frame edges and only narrow passages are left between them in the transverse direction T in order to allow relative extension and retractions movements. Moreover, this configuration allows to completely hide the slits 5 from the users view, thus further improving the aesthetic aspect of the surface covering system 1 and contributing to its architectural integration.

The long and tortuous path defined by the interdigitated flaps 7, 7' combined with the inclination of the surface defined by the photovoltaic panels 2 allows to completely drain the water retained by the flaps 7, 7' before it reaches and wets the surface S covered by the covering system 1.

The inventor has found that the number of flaps 7, 7' of the sealing elements 6 may advantageously be correlated with the inclination angle α of the covering surface defined by the photovoltaic panels 2. In particular, in the case of a steep inclination, e.g. higher than 50°, two flaps 7, 7' per set are sufficient, while in the case of an inclination of 20° or lower at least six flaps 7, 7' per set are needed. At angles comprised between 20° and 50° a progressively lower number of flaps 7, 7' per set is needed, and in particular five flaps per set for angles comprised between 20° and 30°, four flaps per set for angles comprised between 30° and 40° and three flaps per set for angles comprised between 40° and 50°.

Thanks to its waterproof characteristics the covering system 1 may be advantageously combined with thermal and/or acoustic insulation elements, thus being able to accomplish exactly the same functions of thermal and/or acoustic insulation typical of a traditional covering system in addition to the conversion of solar energy into electric energy.

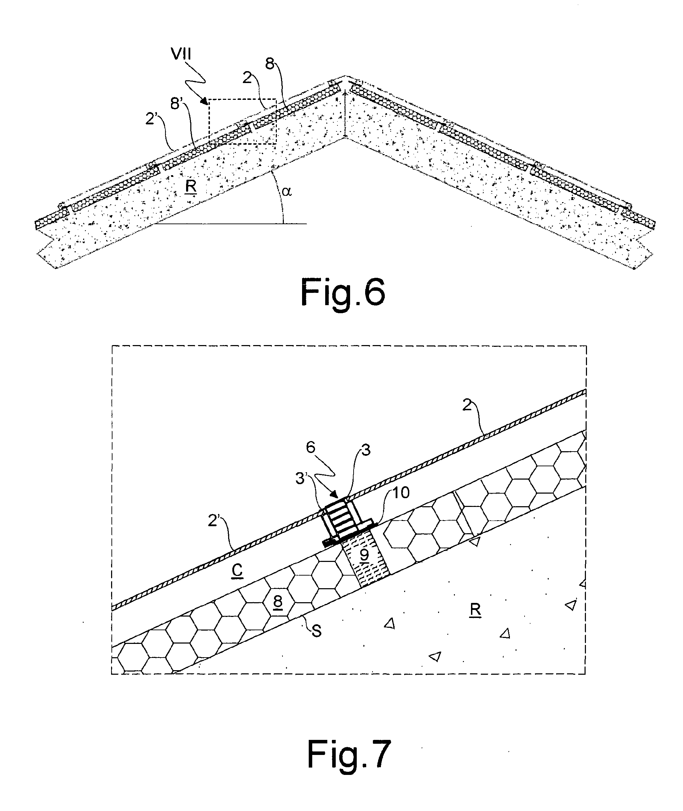

Figures 5 and 6 schematically show a surface covering system 1 according to the invention mounted on the roof R of a building (not shown). The roof R is e.g. inclined at 25° relative to the ground and the sealing elements 6 comprise six flaps 7, 7' per set.

The surface S of the roof R is covered with a plurality of insulation elements 8, 8', ... between which anchoring members 9, 9', ... for brackets 10, 10', ... of the frames 3, 3', ... of the panels 2, 2', ... are inserted. The brackets 10, 10', ... are in particular connected to the spacers 4, 4', ... of the frames 3, 3', ....

It may be appreciated that the covering system 1 of the roof R of the building is absolutely the same as a traditional covering, with the only difference that the insulation elements 8, 8', ... are protected by the photovoltaic panels 2, 2', ... and not by tiles or prefabricated sheet metal elements.

The embodiments of the invention herein described and illustrated are only examples susceptible of numerous variants. For example, alternatively to the two sets of parallel flaps 7, 7', the cross-section of the sealing elements 6 may comprise U-shaped, bellows-shaped, wave-shaped profiles and the like, still allowing them to be extended or retracted upon thermal dilations or retractions while preventing water and dust from passing through the slits 5. Moreover, for each inclination angle α of the covering surface a number of flaps 7, 7' per set higher than the minimum numbers indicated above may be used, thus being able to associate a suitable coefficient of safety to each sealing element 6.

## Claims

1. A surface covering system (1) comprising a plurality of photovoltaic panels (2, 2',...) respectively mounted in frames (3, 3',...) arranged adjacent to each other and a plurality of slits (5) between edges of adjacent frames (3, 3', ...) suitable to create a play therebetween, further comprising a plurality of sealing elements (6) that are fixed to the frames (3, 3', ...) and arranged at the slits (5), said sealing elements (6) extending in a longitudinal direction (L) parallel to the slits (5) and being extensible and retractable in a transverse direction (T) perpendicular to said longitudinal direction (L), the surface covering system (1) is a covering surface defined by the photovoltaic panels (2, 2',...) and is inclined at a predefined angle (α) with respect to a horizontal plane, **characterised in that** the sealing elements (6) comprise two sets of parallel flaps (7, 7') extending in said longitudinal direction (L) and facing each other, said parallel flaps (7, 7') being arranged in a comb-like manner in said transverse direction (T) and being movable relative to each other in the transverse direction (T), and wherein said sets of flaps (7, 7') are respectively fixed to adjacent frames (3, 3') in an assembled configuration of the covering system (1).

2. A covering system according to claim 1, wherein said flaps (7, 7',...) are integrally formed with the frames (3, 3',...).

3. A covering system (1) according to claim 1 or 2, wherein the sealing elements (6) comprise at least two flaps (7, 7') per set for covering surfaces with an inclination angle (α) higher than 50° and at least six flaps (7, 7') per set for covering surfaces with an inclination angle (α) lower than 20°.

4. A covering system (1) according to any one of claims 1 to 3, wherein the frames (3, 3',...) of the photovoltaic panels (2, 2',...) include spacers (4, 4',...) arranged along their peripheries on the face opposite to the face intended to be exposed to solar radiation and suitable to define a ventilation cavity (C) between the photovoltaic panels (2, 2',...) and a surface (S) to be covered in an assembled configuration of the covering system (1).

5. A covering system (1) according to claim 4, wherein said spacers (4, 4',...) are spaced from the peripheral edges of the respective frames (3, 3',...) towards their centers.

6. A covering system (1) according to claim 4 or 5, wherein said spacers (4, 4',...) are made up of straight bars that run along the entire periphery of the frames (3, 3',...) of the photovoltaic panels (2, 2',...).

7. A covering system (1) according to any one of claims 4 to 6, wherein the sealing elements (6) are restrained to the spacers (4, 4', ...).

8. A covering system (1) according to claim 7, wherein the sealing elements (6) are integrally formed with the spacers (4, 4', ...).

9. A covering system (1) according to any one of claims 1 to 8, further comprising a plurality of thermal and/or sound insulation elements (8), said insulation elements (8) being arranged in a ventilation cavity (C) defined between the photovoltaic panels (2) and a surface (S) to be covered and in contact with the latter in an assembled configuration of the covering system (1).

## Patentansprüche

1. Flächenabdeckungssystem (1), das mehrere Photovoltaikplatten (2, 2',...), die jeweils in benachbart zueinander angeordneten Rahmen (3, 3',...) angebracht sind, und mehrere Spalten (5) zwischen Kanten benachbarter Rahmen (3, 3', ...) aufweist, die geeignet sind, einen Spielraum dazwischen zu schaffen, das ferner mehrere Dichtungselemente (6) aufweist, die an den Rahmen (3, 3, ...) befestigt und an den Spalten (5) angeordnet sind, wobei sich die Dichtungselemente (6) in eine Längsrichtung (L) parallel zu den Spalten (5) erstrecken und in eine Querrichtung (T) senkrecht zur Längsrichtung (L) ausdehnbar und zusammenziehbar sind, wobei das Flächenabdeckungssystem (1) eine Abdeckfläche ist, die durch die Photovoltaikplatten (2, 2',...) definiert ist und bezüglich einer horizontalen Ebene unter einem vorgegebenden Winkel (α) geneigt ist, **dadurch gekennzeichnet, daß** die Dichtungselemente (6) zwei Sätze paralleler Krempen (7, 7') aufweisen, die sich in die Längsrichtung (L) erstrecken und einander gegenüberliegen, wobei die parallelen Krempen (7, 7') in einer wabenförmigen Weise in die Querrichtung (T) angeordnet sind und relativ zueinander in die Querrichtung (T) beweglich sind, und wobei die Krempensätze (7, 7') jeweils in einer montierten Konfiguration des Abdeckungssystems (1) an benachbarten Rahmen (3, 3') befestigt sind.

2. Abdeckungssystem nach Anspruch 1, wobei die Krempen (7, 7',...) integral mit den Rahmen (3, 3',...) ausgebildet sind.

3. Abdeckungssystem (1) nach Anspruch 1 oder 2, wobei die Dichtungselemente (6) für Abdeckflächen mit einem Neigungswinkel (α) von mehr als 50° mindestens zwei Krempen (7, 7') pro Satz und für Abdeckflächen mit einem Neigungswinkel (α) von weniger als 20° mindestens sechs Krempen (7, 7') pro Satz aufweisen.

4. Abdeckungssystem (1) nach einem der Ansprüche 1 bis 3, wobei die Rahmen (3, 3',...) der Photovoltaikplatten (2, 2',...) Abstandsstücke (4, 4',...) aufweisen, die längs ihrer Umfänge auf der Fläche gegenüber der Fläche angeordnet sind, die dazu bestimmt ist, der Sonnenstrahlung ausgesetzt zu werden, und geeignet sind, einen Lüftungsschlitz (C) zwischen den Photovoltaikplatten (2, 2', ...) und einer Oberfläche (S) zu definieren, die in einer montierten Konfiguration des Abdeckungssystems (1) abgedeckt werden soll.

5. Abdeckungssystem (1) nach Anspruch 4, wobei die Abstandsstücke (4, 4',...) von den Umfangskanten der jeweiligen Rahmen (3, 3',...) zu ihren Mitten hin beabstandet sind.

6. Abdeckungssystem (1) nach Anspruch 4 oder 5, wobei die Abstandsstücke (4, 4',...) aus geraden Stäben bestehen, die längs des gesamten Umfangs der Rahmen (3, 3',...) der Photovoltaikplatten (2, 2',...) verlaufen.

7. Abdeckungssystem (1) nach einem der Ansprüche 4 bis 6, wobei die Dichtungselemente (6) an den Abstandsstücken (4, 4', ...) gehalten werden.

8. Abdeckungssystem (1) nach Anspruch 7, wobei die Dichtungselemente (6) integral mit den Abstandsstücken (4, 4', ...) ausgebildet sind.

9. Abdeckungssystem (1) nach einem der Ansprüche 1 bis 8, das ferner mehrere Wärme- und/oder Schalldämmelemente (8) aufweist, wobei die Dämmelemente (8) in einem Lüftungsschlitz (C) angeordnet sind, der zwischen den Photovoltaikplatten (2) und einer Oberfläche (S) definiert ist, die abgedeckt werden soll, und in einer montierten Konfiguration des Abdeckungssystems (1) in Kontakt mit der letztgenannten stehen.

## Revendications

1. Système de recouvrement de surface (1) comprenant une pluralité de panneaux photovoltaïques (2, 2', ...) respectivement montés dans des cadres (3, 3', ...) agencés adjacents les uns aux autres et une pluralité de fentes (5) entre les bords des cadres (3, 3', ...) adjacents appropriées pour créer un jeu entre eux, comprenant en outre une pluralité d'éléments d'étanchéité (6) qui sont fixés aux cadres (3, 3', ...) et agencés au niveau des fentes (5), lesdits éléments d'étanchéité (6) s'étendant dans une direction longitudinale (L) parallèle aux fentes (5) et étant extensibles et rétractables dans une direction transversale (T) perpendiculaire à ladite direction longitudinale (L), le système de recouvrement de surface (1) est une surface de recouvrement définie par les panneaux photovoltaïques (2, 2', ...) et est incliné selon un angle (α) prédéfini par rapport à un plan horizontal, **caractérisé en ce que** les éléments d'étanchéité (6) comprennent deux ensembles de volets parallèles (7, 7') s'étendant dans ladite direction longitudinale (L) et se faisant face, lesdits volets parallèles (7, 7') étant agencés en peigne dans ladite direction transversale (T) et étant mobiles les uns par rapport aux autres dans la direction transversale (T), et dans lequel lesdits ensembles de volets (7, 7') sont respectivement fixés à des cadres (3, 3') adjacents dans une configuration assemblée du système de recouvrement (1).

2. Système de recouvrement selon la revendication 1, dans lequel lesdits volets (7, 7', ...) sont formés d'un seul tenant avec les cadres (3, 3', ...).

3. Système de recouvrement (1) selon la revendication 1 ou 2, dans lequel les éléments d'étanchéité (6) comprennent au moins deux volets (7, 7') par ensemble pour recouvrir des surfaces avec un angle d'inclinaison (α) supérieur à 50° et au moins six volets (7, 7') par ensemble pour recouvrir des surfaces avec un angle d'inclinaison (α) inférieur à 20°.

4. Système de recouvrement (1) selon l'une quelconque des revendications 1 à 3, dans lequel les cadres (3, 3', ...) des panneaux photovoltaïques (2, 2', ...) comprennent des éléments d'espacement (4, 4', ...) agencés le long de leurs périphéries sur la face opposée à la face destinée à être exposée au rayonnement solaire et appropriés pour définir une cavité de ventilation (C) entre les panneaux photovoltaïques (2, 2', ...) et une surface (S) à recouvrir dans une configuration assemblée du système de recouvrement (1).

5. Système de recouvrement (1) selon la revendication 4, dans lequel lesdits éléments d'espacement (4, 4', ...) sont espacés des bords périphériques des cadres (3, 3', ...) respectifs vers leurs centres.

6. Système de recouvrement (1) selon la revendication 4 ou 5, dans lequel lesdits éléments d'espacement (4, 4', ...) sont composés de barres droites qui s'étendent le long de la périphérie entière des cadres (3, 3', ...) des panneaux photovoltaïques (2, 2', ...).

7. Système de recouvrement (1) selon l'une quelconque des revendications 4 à 6, dans lequel les éléments d'étanchéité (6) sont retenus sur les éléments d'espacement (4, 4', ...).

8. Système de recouvrement (1) selon la revendication 7, dans lequel les éléments d'étanchéité (6) sont formés d'un seul tenant avec les éléments d'espacement (4, 4', ...).

9. Système de recouvrement (1) selon l'une quelconque des revendications 1 à 8, comprenant en outre une pluralité d'éléments d'isolation thermique et/ou sonore (8), lesdits éléments d'isolation (8) étant agencés dans une cavité de ventilation (C) définie entre les panneaux photovoltaïques (2) et une surface (S) à recouvrir et en contact avec cette dernière dans une configuration assemblée du système de recouvrement (1).
